Europäisches Patentamt

European Patent Office

Office européen des brevets

(19)

(11) Veröffentlichungsnummer: **0 257 395**
**B1**

(12) # EUROPÄISCHE PATENTSCHRIFT

(45) Veröffentlichungstag der Patentschrift:
31.01.90

(51) Int. Cl.⁴: **B65H 23/02**

(21) Anmeldenummer: **87111349.4**

(22) Anmeldetag: **05.08.87**

(54) Verfahren zum Überwachen der Breite eines bandförmigen Gutes.

(30) Priorität: **18.08.86 DE 3627927**

(43) Veröffentlichungstag der Anmeldung:
**02.03.88 Patentblatt 88/9**

(45) Bekanntmachung des Hinweises auf die Patenterteilung:
**31.01.90 Patentblatt 90/5**

(84) Benannte Vertragsstaaten:
**AT BE CH DE FR GB IT LI NL SE**

(56) Entgegenhaltungen:
**GB-A- 2 051 414**

(73) Patentinhaber: **Siemens Aktiengesellschaft,
Wittelsbacherplatz 2, D-8000 München 2(DE)**

(72) Erfinder: **Horvath, Horst Hans, Dipl.-Ing.,
Markgrafenstrasse 12, D-7500 Karlsruhe 1(DE)**

## Beschreibung

Die Erfindung betrifft ein Verfahren zum Überwachen der Lage der Kanten eines bandförmigen Gutes gemäß dem Oberbegriff des Anspruchs 1.

In der DE-PS 30 32 950 ist eine Einrichtung zum Auswerten von optoelektronisch erzeugten Rasterbildern beschrieben, in welcher zwecks Regelung des Bandlaufs eines bandförmigen Gutes die Bandlage mit Hilfe einer Videokamera durch eine fortlaufende Abbildung einer Bandkante als Kontrastsprung erfaßt wird. Zur Auswertung wird jedes Rasterbild zeilenweise abgetastet, und in jeder Zeile werden die Rasterbildpunkte bis zum gewählten Kontrastsprung mittels eines Bildpunktzählers gezählt. In Abhängigkeit von dessen Stand wird ein die Bandlage in die Soll-Lage steuernder Befehl gebildet. In dieser Patentschrift ist ferner angegeben, daß es bei der optischen Erfassung der Bandlage problematisch ist, einen hinreichenden Hell-/Dunkel-Kontrast an den Bandkanten im gesamten Temperaturbereich von etwa 20° bis mehr als 1000° sicherzustellen. Bei zu schwachen Hell-/Dunkel-Kontrasten könne es vorkommen, daß diese nicht mehr vom Bildwandler erfaßt werden, so daß Fehlmessungen die Folge sind, die in die Auswertung fälschend eingehen. Wenn z.B. in einigen Zeilen der Rasterbilder kein Kontrastsprung erfaßt wird, dann kann dies dahingehend gewertet werden, daß der von der Kamera erfaßte Sichtbereich des Bandes ganz verdeckt ist oder daß das Band nicht sichtbar oder überhaupt nicht vorhanden ist.

Desweiteren können Kontrastsprünge, die innerhalb oder außerhalb des Bandes infolge einer Verschmutzung oder durch Reflexe auftreten, dahingehend gewertet werden, daß die Bandkante nicht gerade verläuft, also z.B. ein Teilstück zerklüftet ist,. oder, falle eine sich länger erstreckende Verschmutzung die Ursache ist, daß sich der Lauf des Bandes im Sichtbereich verschiebt. Mit der bekannten Einrichtung werden solche fehlerhaften Auswertungen mit Hilfe eines zweiten Zählers vermieden, der eine Art Ausmittelung der Informationen über den Kantenverlauf bewirkt. Die Auswertung eines nichtlinearen Kantenverlaufs, wie er z. B. bei Schmelzen auftritt, ist mit der bekannten Einrichtung nicht möglich.

Bei der Herstellung von Flachglas werden zur Bestimmung und Überwachung der Banddicke die Auslaufkanten des flüssigen Glases überwacht. Hierzu kann ein Bild der Kanten mit einer Fernsehkamera aufgenommen und auf einem Monitor dargestellt werden, auf dem es vom Bedienungspersonal beobachtet und nach subjektiven Kriterien überwacht wird. Zur leichteren Bedienbarkeit wird das flüssige Glas nicht unmittelbar am Auslauf, sondern erst einige Meter danach beobachtet, so daß Störungen mit großer Verzögerung ausgeregelt werden.

Der vorliegenden Erfindung liegt die Aufgabe zugrunde, ein Verfahren der im Oberbegriff des Anspruchs 1 angegebenen Art zu schaffen, mit dem Kanten von bandförmigem Gut auch dann automatisch erkannt werden, wenn sich die Kante von der Umgebung nur schwach abhebt und sie im Bild des digitalisierten Videosignals nur undeutlich erkannt werden kann.

Erfindungsgemäß wird diese Aufgabe mit den im kennzeichnenden Teil Anspruchs 1 angegebenen Maßnahmen gelöst.

Die .Toleranzgrenzen können vom Bedienungspersonal am Monitor eingestellt werden, wobei die Verschiebung aus der Anzahl der Verschiebeschritte und der Schrittweite in Bildpunkten ermittelt werden kann.

Anhand der Zeichnung werden im folgenden die Erfindung sowie Weiterbildungen und Vorteile näher beschrieben und erläutert.

Figur 1 veranschaulicht ein Ausführungsbeispiel der Erfindung.

Figur 2 zeigt das Prinzipschaltbild einer Anordnung zur Durchführung des erfindungsmäßen Verfahrens.

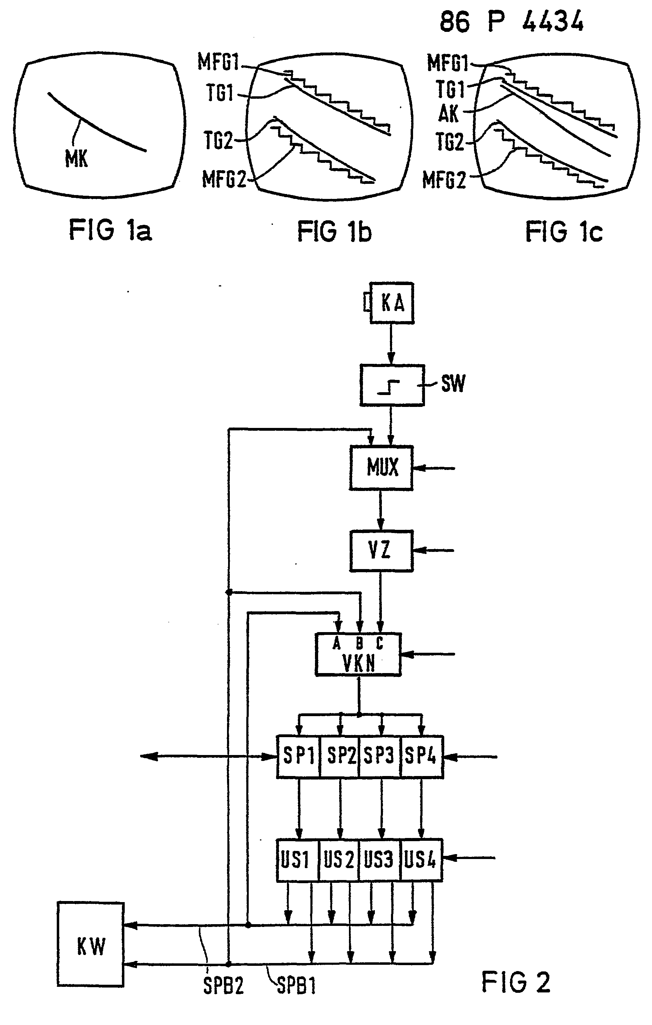

Figur 1a zeigt das binärisierte Bild einer Kante MK von auslaufendem flüssigen Glas. Dieses Bild ist von einer Videokamera aufgenommen, in ein Binärbild umgesetzt und einer sogenannten Bildreinigung unterzogen worden, bei der störende Bildstrukturen beseitigt werden, die aufgrund von Störeffekten, Streu- und Spitzlichtern entstehen. Die Breite des flüssigen Glasbandes ist ein Maß für die Dicke des hergestellten Flachglases; sie muß daher konstantgehalten werden. Zum Festlegen der Toleranzgrenzen, innerhalb deren die Kante liegen darf, wird ein Bild der Kante selbst herangezogen. Hierzu wird eine Musterkante MK aufgenommen und gespeichert und nach beiden Seiten so weit verschoben, daß dazwischen der Bereich entsteht, in dem die Kante liegen darf. Beide Toleranzgrenzen TG1, TG2 werden zweckmäßig auf dem Bildschirm eines Sichtgerätes dargestellt (Figur 1b). Da zum speichern von Bildern den Bildpunkten Koordinaten zugeordnet werden, bedeutet Verschieben von Bildern die lineare Änderung der Zuordnung. Am einfachsten ist die Verschiebung in einer Koordinatenrichtung, jedoch kann auch mitunter eine Verschiebung in einer anderen Richtung zweckmäßig sein, z. B. senkrecht zum Kantenverlauf. Dabei ist allerdings zu beachten, daß die Kante von flüssigem Glas vor allem in der Nähe des Ausgusses nicht geradlinig, sondern in einer gekrümmten Kurve verläuft. Die Kanten sollen aber in der Nähe des Ausgusses überwacht werden, damit Veränderungen des Durchflusses möglichst rasch ausgeregelt werden können.

Nachdem die beiden Toleranzgrenzen festgelegt sind, wird die jeweils aktuelle Kante überwacht. Figur 1c zeigt ein Bild der beiden Toleranzgrenzen TG1, TG2 mit dem Bild der dazwischenliegenden aktuellen Bandkante AK. Da der Abstand der Toleranzgrenzen als Anzahl von Bildpunkten bekannt ist, kann die Lage der aktuellen Bandkante AK bezüglich der Toleranzgrenzen ermittelt werden, und zwar Anzahl von Bildpunkten. Erreicht die aktuelle Bandkante eine Toleranzgrenze, wird der Glasdurchfluß so verändert, daß die Kante in den Toleranzbereich zurückwandert. Der Abstand der aktuellen Bandkante von den Toleranzgrenzen kann als Anzahl von Bildpunkten ermittelt werden, so daß der Glasfluß kontinuierlich geregelt werden kann, bevor die aktuelle Bandkante eine Toleranzgrenze erreicht. Der als Regelgröße verwendete Abstand kann der minimale Abstand oder der mittlere Abstand sein, oder es kann auch die Fläche zwischen aktueller Bandkante und Toleranzgrenze herangezogen werden. Selbstverständlich müssen für beide Bandkanten Toleranzgrenzen festgelegt und die Lagen beider Kanten überwacht werden.

Wegen der vielen Störungen in den digitalisierten Bildern von Glasschmelzen und bei der Überwachung der Lage von Bandkanten anderer industrieller Prozesse wird nicht das gesamte Bild ausgewertet, sondern nur ein ausgewählter Bereich, der die Toleranzgrenzen und das dazwischenliegende Gebiet überdeckt. Hierzu wird ein Meßfeld mit Meßfeldgrenzen MFG1, MFG2 gebildet, wie in den Figuren 1b und 1c veranschaulicht, welches die Toleranzgrenzen TG1, TG2 überdeckt. Nur Signale von Bildpunkten, die im Meßfeld liegen, werden bei der Auswertung berücksichtigt.

In Figur 2 ist mit KA eine Feuerraumkamera bezeichnet, die eine Glasschmelze zum Herstellen von Flachglas aufnimmt. An sie ist eine Schwellwertschaltung SW angeschlossen, deren Ausgangssignal den Signalzustand wechselt, wenn die Kamera eine Kante abtastet. Im einfachsten Falle vergleicht die Schwellwertschaltung lediglich die Amplitude des Videosignals mit einem Amplitudenschwellwert, der in Abhängigkeit der mittleren Videosignalamplitude verändert wird. Das Videosignal kann aber auch über einen Hochpaß geführt werden, dessen Ausgangssignal von einem Flankenkomparator mit einem Flankenschwellwert verglichen wird. In Abhängigkeit des Vergleichsergebnisses wird ein binäres Flanken- und ein Vorzeichensignal abgegeben. Flanken- und Vorzeichensignal sowie gegebenenfalls zusätzlich das Amplitudensignal werden in einer Logikschaltung derart verknüpft, daß deren binäres Ausgangssignal bei Auftreten einer Kante sich ändert. Ein Multiplexer MUX schaltet wahlweise das Ausgangssignal der Schwellwertschaltung SW oder eines von vier Bildspeichern SP1, SP2, SP3, SP4 auf eine Verzögerungsschaltung VZ, deren Ausgangssignal einem Eingang C einer steuerbaren logischen Verknüpfungsschaltung VKN zugeführt ist. Zwei weitere Eingänge A, B sind über Speicherbusleitungen SPB1, SPB2 mit den Ausgängen von Umschaltern US1, US2, US3, US4 verbunden. Das Ausgangssignal der Verknüpfungsschaltung kann wahlweise einem von vier Speichern SP1, SP2, SP3, SP4 zugeführt werden, an welche die Umschalter US1, US2, US3, US4 angeschlossen sind, so daß die Speicherinhalte wahlweise auf eine der beiden Speicherbusleitungen SPB1, SPB2 geschaltet werden können. An diese ist außer der Verknüpfungsschaltung VKN eine Auswerteeinheit KW angeschlossen.

In einem ersten Schritt des neuen Verfahrens wird mit der Kamera KA eine Musterkante der Glasschmelze aufgenommen und das dabei gewonnene Binärsignal in einen der vier Speicher, z.B. in den Speicher SP1, eingetragen. Dieses Bild ist durch Störeffekte verunreinigt und ist daher zur Erzeugung der Toleranzgrenze noch nicht geeignet. Zur Bildreinigung werden die im Speicher SP1 enthaltenen Bilddaten auf den Speicherbus SPB1 geschaltet und über den Multiplexer MUX auf die Verzögerungseinheit VZ geführt, dort um eine einstellbare Bildpunktzahl in wählbarer Richtung verschoben. Die so verzögerten Bilddaten werden mit den ursprünglichen Bilddaten in der Verknüpfungsschaltung VKN UND-verknüpft, so daß alle Bildstörungen, die in der gewählten Schieberichtung eine Ausdehnung haben, die kleiner ist als die Verschiebestrecke, beseitigt werden. Dieses Verfahren kann für mehrere Verschieberichtungen wiederholt werden. Vorteilhaft erfolgt die Verschiebung nur in Kantenrichtung, und zwar zunächst in der einen Richtung und dann in entgegengesetzter Richtung. Dieses Verfahren der Bildreinigung ist ebenso wie die Anordnung nach Figur 2 ausführlich in der europäischen Patentanmeldung 86 108 673.4 angegeben.

Nachdem das Bild der Musterkante gereinigt und in den Speicher SP1 eingetragen ist, wird es in einer beliebigen, aber zweckmäßig erscheinenden Richtung, z.B. in Richtung der Rasterzeilen, senkrecht dazu oder senkrecht zum Kantenverlauf, verschoben, bis die gewünschte Toleranzgrenze erreicht ist. Die Verschiebung kann auf einem Monitor kontrolliert werden. Das verschobene Bild, das ist die erste Toleranzgrenze, wird in den Speicher SP2 eingetragen. Danach erfolgt eine Bildverschiebung in der entgegengesetzten Richtung. Bei Erreichen der zweiten gewünschten Toleranzgrenze kann das dann verschobene Bild in den Speicher SP1 übernommen werden. Die beiden Speicherinhalte können gleichzeitig ausgelesen, in der Verknüpfungsschaltung VKN nach einer ODER-Funktion verknüpft werden und in den Speicher SP1 eingetragen werden, so daß für die weiteren Verfahrensschritte die drei Speicher SP2, SP3, SP4 frei sind.

Bei der folgenden kontinuierlichen Überwachung der Bandkanten wird zunächst das ungereinigte Binärbild in den Speicher SP2 eingetragen, dann gereinigt und mit dem im Speicher SP1 enthaltenen Bild der Toleranzgrenzen verglichen. Der Vergleich kann von der Verknüpfungsschaltung VKN durchgeführt werden, die, wenn die Bandkante und die Toleranzgrenzen mit log. "1"-Signalen dargestellt sind, die Signale an den Eingängen A, B UND-verknüpft und in den Speicher SP3 einträgt. In diesem stehen dann die Überschneidungen von Bandkante und Toleranzgrenzen.

Ein solches Verfahren hat den Nachteil, daß das Bild der Bandkante Lücken aufweisen kann und daß daher bei einem Vergleich des Bildes der Bandkante mit den Toleranzgrenzen unter Umständen Überschneidungen nicht festgestellt werden können. Dieser Nachteil läßt sich dadurch vermeiden, daß die Plätze im Speicher SP1, die außerhalb der Toleranzgrenzen liegenden Bildpunkten entsprechen, mit log. "1"-Signal aufgefüllt werden. In diesem Fall werden Meldesignale in den Speicher SPB3 eingetragen, wenn die Bandkante eine Toleranzgrenze erreicht oder überschreitet.

Es soll nicht nur festgestellt werden, ob die Toleranzgrenze erreicht ist oder nicht, sondern es soll auch der Abstand von der Toleranzgrenze ermittelt werden, damit frühzeitig ein Regeleingriff durchgeführt werden kann. Hierzu wird das Bild der aktuellen Bandkante bildpunktweise verschoben, und zwar in derselben Richtung wie beim Einstellen der Toleranzgrenzen. Die Anzahl der Schritte bis zum Erreichen einer Toleranzgrenze ist dann ein Maß für den Abstand.

Selbstverständlich kann der Vergleich zwischen aktueller Bandkante und Toleranzgrenzen auch in der Auswerteeinheit AW durchgeführt werden, z.B. indem dort in jeder Zeile der Abstand der Bildpunkte gezählt wird. Es können auch Mittelwerte gebildet oder die Fläche zwischen aktueller Kante und Toleranzgrenzen ermittelt und daraus ein Regelsignal abgeleitet werden.

Da sich die Lage der Bandkante nur langsam verändert, genügt es, die Überwachung auf ein Meßfeld zu beschränken, dessen Bildpunkte im Überwachungsbereich oder nur wenig außerhalb liegen. Damit wird erreicht, daß fehlerhafte Meldungen von Toleranzgrenzenüberschreitungen, die weit außerhalb des Toleranzbereiches liegen und daher nicht plötzlich auftreten können, unterdrückt werden. Das Meßfeld kann in einem zusätzlichen, den Speichern SP1, SP1, SP3, SP4 entsprechenden Speicher hinterlegt werden. Es kann wie der Toleranzbereich dadurch gebildet werden, daß das Bild der Musterkante verschoben wird, und zwar über die Toleranzgrenzen hinaus. Die Speicherzellen, die im Meßfeld liegenden Bildpunkten zugeordnet sind, werden mit log. "1"-Signal, die anderen mit log. "0"-Signal geladen. Wird dann der Inhalt des zusätzlichen Speichers mit den Bilddaten der aktuellen Bandkante UND-verknüpft, so werden im aktuellen Bild alle außerhalb des Meßfeldes liegenden Störungen unterdrückt. Die Bildung des Meßfeldes und die Beschränkung der Auswertung auf im Meßfeld liegende Bildpunkte kann auch in der Auswerteeinheit AW vorgenommen werden.

**Patentansprüche**

1. Verfahren zum Überwachen der Breite eines bandförmigen Gutes, insbesondere von Glasschmelzen bei der Herstellung von Flachglas, mit einer Bildauswertevorrichtung, bestehend aus einer Fernsehkamera, welche die Kanten des bandförmigen Gutes aufnimmt, einer Digitalisierungseinheit, welche die analogen Videosignale in Digitalsignale umsetzt, und einem Speicher, in dem die Digitalsignals von einem oder mehreren Bildern gespeichert werden können, **gekennzeicht durch:**
    – das Bild einer Musterkante wird aufgenommen und in zwei einander entgegengesetzten Richtungen bis zu je einer Toleranzgrenze verschoben;
    – die Bilder der Toleranzgrenzen werden gespeichert;
    – die Bilder der jeweils aufgenommen aktuellen Kanten werden mit denen der Toleranzgrenzen verglichen, und bei Erreichen oder Überschreiten der Toleranzgrenzen wird ein Meldesignal abgegeben.
2. Verfahren nach Anspruch 1, **dadurch gekennzeichnet,** daß aus den Meldesignalen ein Regelsignal abgeleitet wird, mit dem die Kantenlage so gesteuert wird, daß sie innerhalb der Toleranzgrenzen bleibt.

3. Verfahren nach Anspruch 1, **dadurch gekennzeichnet,** daß die Differenz der Koordinaten der Bildpunkte der Toleranzgrenzen und der aktuellen Bandkante ermittelt und in Abhängigkeit dieser Differenz ein Regelsignal erzeugt wird.

4. Verfahren nach einem der Ansprüche 1 bis 3, **dadurch gekennzeichnet,** daß nur für Bildpunkte der aktuellen Bandkante, die innerhalb eines Meßfledes liegen, ein Meldesignals bzw. ein Regelsignal abgegeben wird.

5. Verfahren nach einem der Ansprüche 1 bis 4, **dadurch gekennzeichnet,** daß die Bilder der Toleranzgrenzen (TG1, TG2) und der aktuellen Bandkante (AK) sowir gegebenenfalls des Meßfeldes (MFG1, MFG2) auf einem Monitor dargestellt werden.

**Claims**

1. Method for monitoring the width of a band-like material, more particularly of glass melts when producing flat glass, having an image evaluating arrangement consisting of a television camera which picks up the edges of the band-like material, a digitalization unit which converts the analog video signals into digital signals, and a memory in which the digital signals from one or several images can be stored, characterised in that
    – the image of a sample edge is picked up and displaced in two opposite directions as far as a respective tolerance limit;
    – the images of the tolerance limits are stored;
    – the images of the current edges picked up in each case are compared with those of the tolerance limits and when the tolerance limits are reached or crossed a status signal is emitted.
2. Method according to claim 1, characterised in that a control signal is derived from the status signals, with which control signal the edge position is controlled in such a way that it remains within the tolerance limits.
3. Method according to claim 1, characterised in that the difference in the coordinates of the image limits and the current band points of the tolerance edge is determined and a control signal is produced as a function of this difference.
4. Method according to one of the claims 1 to 3, characterised in that a status signal or a control signal respectively is emitted only for image points of the current band edge which lie within a measurement field.
5. Method according to one of the claims 1 to 4 characterised in that the images of the tolerance limits (TG1, TG2) and the current band edge (AK) as well as, if applicable, the measurement field (MFG1, MFG2) are represented on a monitor.

**Revendications**

1. Procédé pour contrôler la largeur d'un matériau en forme de bande, notamment d'une masse de verre fondue lors de la fabrication de verre plat, comportant un dispositif d'évaluation d'images, constitué par une caméra de télévision, qui détecte les bords du matériau en forme de bande, une unité de numérisation, qui convertit les signaux vidéo analogiques en des signaux numériques, et une mémoire, dans laquelle les signaux numériques d'une ou de plusieurs images peuvent être mémorisés, caractérisé par le fait que:

- on enregistre l'image d'un bord type et on la déplace dans deux directions réciproquement opposées jusqu'à une limite de tolérance respective;
- on mémorise les images des limites de tolérances;
- on compare les images des bords réels, respectivement détectés, à celles qui correspondent aux limites de tolérances et un signal de signalisation est délivré lorsque les limites de tolérances sont atteintes ou dépassées.

2. Procédé suivant la revendication 1, caractérisé par le fait qu'on dérive, des signaux de signalisation, un signal de régulation qui commande la position du bord de manière qu'il reste à l'intérieur des limites de tolérances.

3. Procédé suivant la revendication 1, caractérisé par le fait que la différence des coordonnées des points d'image des limites de tolérances et du bord réel de la bande est déterminée et qu'un signal de réglage est produit en fonction de cette différence.

4. Procédé suivant l'une des revendications 1 à 3, caractérisé par le fait qu'un signal de signalisation ou un signal de réglage est délivré uniquement pour les points d'image du bord réel de la bande, qui sont situés à l'intérieur d'une plage de mesure.

5. Procédé suivant l'une des revendications 1 à 4, caractérisé par le fait que les images des limites de tolérances (TG1, TG2) et du bord réel (AK) de la bande ainsi que, éventuellement, de la plage de mesure (MFG1, MFG2), sont représentées sur un moniteur.

86 P 4434

MFG1
TG1

TG2

MFG2

MK

FIG 1a          FIG 1b          FIG 1c

MFG1
TG1
AK
TG2
MFG2

KA

SW

MUX

VZ

A  B  C
VKN

SP1 | SP2 | SP3 | SP4

US1 | US2 | US3 | US4

KW

SPB2      SPB1

FIG 2